# FASCICULE DE BREVET EUROPEEN

(11) **EP 0 655 383 B1**
(45) Date de publication et mention de la délivrance du brevet: **27.01.1999**
(21) Numéro de dépôt: 94402541.0
(22) Date de dépôt: 09.11.1994
(51) Int. Cl.: B62D 1/19

(54) **Dispositif d'absorption d'énergie pour colonne de direction de véhicule automobile**
Energieaufnehmende Einrichtung für die Lenksäule eines Kraftfahrzeugs
Energy absorbing system for a steering column of a motor vehicle

(30) Priorité: 29.11.1993 FR 9314260
(43) Date de publication de la demande: 31.05.1995
(73) Titulaire: LEMFÖRDER NACAM SA, 41100 Vendôme (FR)
(72) Inventeur: Fevre, Laurent, F-41000 Saint-Sulpice (FR); Dupont, Eddy, F-41100 Vendome (FR); Fouquet, Jean-Michel, F-41100 Vendome (FR)
(74) Mandataire: Phélip, Bruno

(56) Documents cités:
- DE-A- 2 814 145
- DE-C- 3 619 125
- GB-A- 1 523 638
- GB-A- 2 244 032
- GB-A- 2 264 906

## Description

La présente invention se rapporte à un dispositif d'absorption d'énergie de colonne de direction de véhicule automobile, dont l'arbre de direction est monté dans un tube-corps, qui est supporté et bloqué sur la carrosserie à la position voulue.

Nous connaissons des dispositifs permettant le réglage angulaire de colonne de direction, comme ceux décrits dans le document GB-A-1.523.638. De tels dispositifs peuvent permettre un réglage en hauteur de la position du volant, tel que celui décrit dans le document DE-C-3.619.125.

L'amélioration de la sécurité passive des automobiles a conduit les constructeurs automobiles à doter les colonnes de direction de systèmes à absorption d'énergie. Ces systèmes visent, lors d'un choc frontal, à diminuer l'effort que subit le conducteur non ceinturé contre le volant, par dissipation progressive de l'énergie qu'il contient dans la colonne. Il existe pour cela de nombreux dispositifs à absorption d'énergie qui s'adaptent sur les colonnes de direction de véhicule automobile et ceux notamment qui utilisent la déformation plastique d'un élément comme celui décrit dans le document GB-A-2.244.032 montrant les caractéristiques définies dans le préambule de la revendication 1. L'élément déformable pouvant être métallique, découpé dans une tôle d'acier comme ceux décrits dans les documents GB-A-2.262.906 et DE-A-28 14 145. Ces dispositifs ne permettent pas de déterminer et de régler de façon précise les différents paramètres de l'effort de mise en mouvement ainsi que de l'énergie absorbée.

Le but de la présente invention est de proposer un dispositif d'absorption d'énergie qui puisse s'adapter facilement sur des colonnes de direction de véhicule automobile tout en permettant un réglage précis de l'effort de mise en mouvement ainsi que de l'énergie absorbée.

A cet effet, l'invention a pour objet une colonne de direction telle que définie dans la revendication 1. Dans des modes de réalisation préférés, la colonne de direction est conforme à l'une quelconque des revendication 2 à 15.

Avantageusement, le dispositif d'absorption d'énergie se rapporte à une colonne de direction de véhicule automobile, dont l'arbre de direction est monté dans un tube-corps, lequel est supporté et bloqué sur la carrosserie à la position voulue. Ce dispostif comporte:
- un support lié à la carrosserie et recevant le tube-corps,
- un système de blocage du tube-corps dans le support, dont l'axe de blocage est perpendiculaire à l'axe de la colonne de direction,
- le tube-corps présentant les passages traversés par le système de blocage,
- au moins une articulation du tube-corps sur le support, ladite articulation étant solidaire du tube-corps,
- au moins un élément de déformation intégré au support, et relié à l'articulation du tube-corps sur le support,
- de manière qu'en cas de choc, le tube-corps entraîne l'élément de déformation afin d'absorber l'énergie, chacun des passages du tube-corps étant muni d'un dégagement orienté dans la direction du volant du conducteur, de façon à permettre à ce tube-corps de se dégager du système de blocage.

Dans une forme de réalisation, le blocage du tube-corps dans le support se fait par l'intermédiaire d'un carré-renfort solidaire du tube-corps et comportant des montants, chacun des montants du carré-renfort possédant un passage traversé par le système de blocage, le support comportant des montants correspondants, qui possèdent chacun une lumière.

Le système de blocage peut comprendre:
- une vis de serrage traversant la lumière de chacun des montants du support ainsi que le passage de chacun des montants du carré-renfort, et étant immobilisée en rotation,
- un écrou monté à l'une des extrémités filetées de la vis de serrage à l'extérieur du montant correspondant du support,
- un organe de manoeuvre monté à l'autre extrémité filetée de la vis de serrage à l'extérieur du montant correspondant du support,
- une entretoise montée sur la vis de manoeuvre entre les deux montants du carré-renfort,
- de manière qu'en tournant l'organe de manoeuvre dans le sens voulu autour de l'axe de blocage, on réalise le blocage désiré.

Dans un tel mode de réalisation, le support est avantageusement constitué par:
- deux montants reliés l'un à l'autre à leur partie inférieure par un élément de raccordement, le carré-renfort étant réalisé sous forme d'une pièce unique ou en plusieurs parties,
- chacun des deux montants se prolongeant à sa partie supérieure par une face d'appui, sensiblement perpendiculaire au montant correspondant, chaque face d'appui venant s'appliquer contre la carrosserie et ayant un contour conjugué avec le contour de la partie de la carrosserie correspondante de manière à pouvoir y être fixée,
- les deux montants pouvant avoir une lumière de passage de l'axe de blocage, qui permet le débattement de la colonne de direction pour son réglage en inclinaison,
- les deux montants étant munis d'un trou de passage de l'articulation du carré-renfort appartenant au tube-corps.

Le carré-renfort est de préférence constitué par deux montants reliés l'un à l'autre à leur partie inférieure par un élément de raccordement, le carré-renfort étant réalisé sous forme d'une pièce unique ou en plusieurs parties,
- les deux montants étant solidarisés au tube-corps à leur partie supérieure,
- le passage avec son dégagement aménagé sur chacun des montants pour être traversé par l'axe de blocage, étant réalisé par une échancrure,
- chaque échancrure comportant un fond demi-circulaire dont l'axe correspond à l'axe de blocage, prolongé par deux côtés parallèles l'un par rapport à l'autre débouchant à l'extrémité du montant situé du côté du volant du conducteur,
- les deux montants étant munis chacun d'un trou de passage de l'articulation du carré-renfort sur le support, ces trous de passage étant situés à l'autre extrémité, opposée au conducteur.

Avantageusement, l'articulation du carré-renfort du tube-corps sur le support est constituée par deux demi-axes qui sont montés sur chacun des montants du tube-corps et du support.

L'élément de déformation étant intégré au support, qui est relié à l'articulation constituée par le demi-axe, le demi-axe relie l'élément de déformation intégré au montant du support, et le montant correspondant du carré-renfort, qui sont chacun munis du trou de passage du demi-axe, dont la tête s'applique contre la face interne du montant du carré-renfort, et dont l'embout s'applique contre la face externe du montant correspondant du support.

L'élément de déformation est constitué par une zone du tube-corps ou de chacun de ses montants, qui est disposée autour du trou de passage de l'articulation. Selon différentes variantes de réalisation de l'invention, la zone de l'élément de déformation peut comporter l'une au moins des caractéristiques suivantes:
- une découpe en forme de lunule dirigée sensiblement dans le sens de l'axe d'inclinaison,
- une découpe en forme de U dirigée sensiblement perpendiculairement à l'axe d'inclinaison,
- une découpe en forme de deux chevrons disposés de part et d'autre du trou de passage dans le sens de l'axe d'inclinaison,
- une découpe en forme de deux lumières disposées de part et d'autre du trou de passage perpendiculaire à l'axe d'inclinaison,
- une découpe en forme d'une lumière disposée dans le sens de l'axe d'inclinaison, et débouchant dans le trou de passage,
- un retour du montant en forme de languette comportant le trou de passage, et recouvrant une échancrure disposée dans le sens de l'axe d'inclinaison.

Selon l'invention, le mode de fonctionnement du dispositif d'absorption d'énergie dû à un choc sur une colonne de direction de véhicule automobile, dont l'arbre de direction est monté dans un tube-corps, qui est supporté et bloqué sur la carrosserie à la position voulue comprend les phases ci-après:
- le conducteur heurte le volant et transmet l'effort au tube-corps,
- lorsque cet effort atteint une valeur suffisante, au moins un élément de déformation est entraîné afin d'absorber l'énergie, l'élément de déformation étant solidarisé avec le support et relié au tube-corps par l'articulation du tube-corps sur le support, chacun des passages aménagés pour l'axe du système de blocage du tube-corps dans le support, étant muni d'un dégagement de façon à permettre le dégagement du système de blocage.

Le conducteur peut aussi heurter l'air-bag gonflé et transmettre l'effort au volant par l'intermédiaire de cet air-bag.

Le dispositif d'absorption d'énergie de colonne de direction de véhicule automobile selon l'invention présente ainsi l'avantage de pouvoir s'adapter facilement sur les colonnes de direction de véhicule automobile existantes, tout en permettant de prévoir et d'ajuster de façon précise l'effort de mise en mouvement, ainsi que l'énergie absorbée.

La présente invention va maintenant être illustrée sans être aucunement limitée par des exemples de réalisation, en référence aux dessins annexés, sur lesquels:
La Figure 1 est une vue longitudinale axiale d'une colonne de direction comportant un dispositif d'absorption d'énergie différent de celui conforme à l'invention, l'élément de déformation étant une pièce indépendante.
La Figure 2 est une demi-vue de dessus, et une demi-coupe suivant II-II de la Figure 1.
La Figure 3 est une coupe transversale suivant III-III de la Figure 1.
La Figure 4 est une vue longitudinale du tube-corps avec son carré-renfort, de la colonne représentée sur les Figures 1 à 3.
La Figure 5 est une vue longitudinale du support de la colonne représentée sur les Figures 1 à 3.
La Figure 6 est une vue longitudinale du support suivant l'invention.
La Figure 7 est une vue longitudinale d'une variante du support suivant l'invention.
La Figure 8 est une vue longitudinale d'une variante du support suivant l'invention.
La Figure 9 est une vue longitudinale d'une variante du support suivant l'invention.
La Figure 10 est une vue longitudinale d'une variante du support suivant l'invention.
La Figure 11 est une vue longitudinale d'une variante du support suivant l'invention.
La Figure 12 est une coupe partielle suivant XII-XII de la Figure 11.
La Figure 13 représente une variante d'un demi-axe.
La Figure 14 représente une variante d'un demi-axe.
La Figure 15 est une vue en perspective correspondant à la Figure 1.

Le dispositif d'absorption d'énergie selon l'invention s'applique à une colonne de direction de véhicule automobile, en particulier réglable en inclinaison.

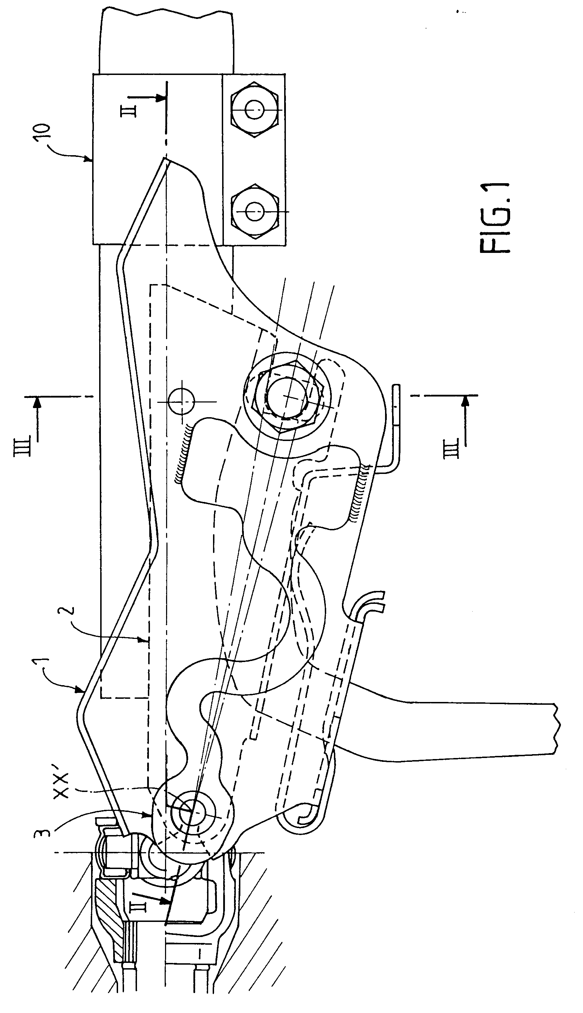

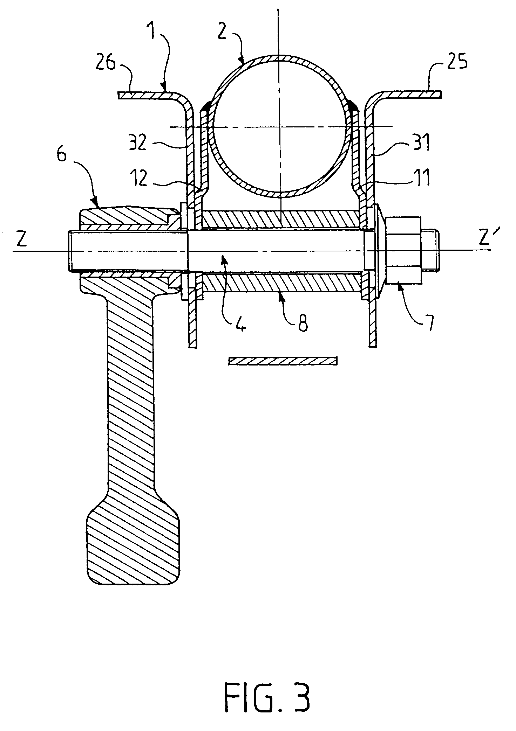

Une colonne de direction non conforme à l'invention est décrite ci-dessous, en référence aux figures 1-4 et 15. Cet exposé préalable servira ensuite à introduire l'invention et permettra de mieux la comprendre.

L'arbre de direction de cette colonne est monté dans un tube-corps 10 au moyen de roulements. Le tube-corps 10 est supporté et bloqué sur la carrosserie à la position voulue.

Un support 1 est lié à la carrosserie et reçoit le tube-corps 10. Ce support 1 est la partie fixe de la colonne et il ne bouge pas pendant le réglage.

Un carré-renfort 2 est solidaire du tube-corps 10, et cet ensemble est le corps mobile, qui est la partie qui supporte l'axe de direction. Cet ensemble bouge pendant le réglage autour de l'axe X-X'.

Ce montage à carré-renfort est classique, mais il pourrait être remplacé par un montage équivalent destiné à monter le tube-corps 10 sur le support 1.

Un système de blocage est solidaire du tube-corps 10 par l'intermédiaire de son carré-renfort 2 dans le support 1. Ce système de blocage a son axe de blocage qui est perpendiculaire à l'axe de colonne de direction.

Le dispositif comporte au moins un élément de déformation qui est solidarisé avec le support 1 et qui est raccordé au carré-renfort 2 du tube-support 10 par l'intermédiaire d'un élément de liaison. Dans le cas des Figures 1 à 3, l'élément de déformation est un tirant référencé 3 monté sur le support 1.

Le support 1 est constitué par deux montants 31 et 32 qui sont reliés l'un à l'autre à leur partie inférieure par un élément de raccordement 27. Les deux montants et l'élément de raccordement peuvent être une pièce unique ou en plusieurs parties. Chacun des deux montants 31 et 32 se prolonge à sa partie supérieure par une face d'appui respective 25 et 26. Chacune de ces faces d'appui 25 et 26 est sensiblement perpendiculaire au montant correspondant 31 et 32. Chaque face d'appui 25 et 26 vient s'appliquer contre la carrosserie, et a un contour conjugué avec le contour de la partie de la carrosserie correspondante de manière à pouvoir y être fixée.

Les deux montants 31 et 32 du support 1 ont chacun une lumière 28 de passage de l'axe du système de blocage. Cette lumière est dimensionnée de manière à permettre le débattement de la colonne de direction pour son réglage en inclinaison. De plus, les deux montants 31 et 32 sont munis d'un trou de passage 29 de l'articulation du carré-renfort 2 appartenant au tube-corps 10. On notera que les lumières 28 ne sont pas nécessaires pour les colonnes de direction qui ne sont pas réglables en direction. L'invention trouve également application pour ce type de colonnes.

Le carré-renfort 2 est constitué par deux montants 11 et 12, qui sont reliés l'un à l'autre à leur partie inférieure par un élément de raccordement 13. Le carré-renfort 2 peut être une pièce unique ou un assemblage de plusieurs pièces. Les deux montants 11 et 12 sont solidarisés au tube-corps à leur partie supérieure par des cordons de soudure.

Chacun des montants 11 et 12 est muni d'un passage 14 destiné à être traversé par l'axe du système de blocage. Chacun de ces passages 14 possède un dégagement 15 qui est réalisé par une échancrure 16. Chaque échancrure 16 est constituée par un fond demi-circulaire 17 dont l'axe correspond à l'axe du système de blocage, et ce fond demi-circulaire 17 est prolongé par deux côtés 18 parallèles, l'un par rapport à l'autre, et débouchant à l'extrémité 20 du montant situé du côté du volant du conducteur.

Enfin, les deux montants 11 et 12 sont munis d'un trou de passage 19 de l'articulation du carré-renfort 2 sur le support 1. Ce trou de passage 19 est situé à l'autre extrémité 21 de chacun des montants qui est opposé au conducteur.

Le système de blocage du tube-corps 10 par son carré-renfort 2 dans le support 1 est constitué par la vis de serrage 4 qui traverse chacun des montants 31 et 32 du support 1, et chacun des montants 11 et 12 du carré-renfort 2. Plus précisément, la vis de serrage 4 traverse la lumière 28 de chacun des montants 31 et 32 du support 1, et le passage 14 de chacun des montants 11 et 12 du carré-renfort 2. De plus, la vis 4 est immobilisée en rotation.

Un écrou 7 est monté à l'une des extrémités filetées de la vis de serrage 4, et ceci à l'extérieur du montant 31 correspondant du support 1. Un organe de manoeuvre 6 est monté à l'autre extrémité de la vis de serrage 4, et à l'extérieur du montant 32 correspondant du support 1. Enfin, une entretoise 8 est montée sur la vis de manoeuvre 4 entre les deux montants 11 et 12 du carré-renfort 2.

L'organe de manoeuvre 6 qui est taraudé et qui se monte à l'extrémité de la vis 4 filetée, génère par sa rotation un mouvement dans l'axe de la vis 4 par l'intermédiaire du système vis-écrou. Ce mouvement axial tend à plus ou moins comprimer ou libérer le carré-renfort 2 par rapport au support 1, le tube-corps 2 étant coincé entre le support 1 et l'entretoise 8. La vis de serrage 4 est immobilisée en rotation par un système non représenté. L'écrou 7 permet de régler la tension dans la vis de serrage 4 d'axe Z-Z'. Le blocage du carré-renfort par rapport au support 1 se fait ainsi uniquement par adhérence.

Il faut noter que tout autre système permettant un blocage par adhérence du tube-corps par rapport au support peut être utilisé, par exemple des systèmes à cames ou genouillères sans sortir du cadre de l'invention.

L'articulation du carré-renfort 2 du tube-corps 10 sur le support 1 est constituée par deux demi-axes 5, qui sont montés chacun sur des montants correspondants 11 et 31 d'une part, et 12 et 32 d'autre part. Cette articulation constitue le pivot inférieur de la colonne de direction.

L'élément de liaison entre le carré-renfort 2 et l'élément de déformation constitué par le tirant 3 est constitué par un des deux demi-axes 5.

L'élément de liaison constitué par le demi-axe 5 relie le tirant en tant qu'élément de déformation, le montant correspondant 31 du support 1, et le montant correspondant 11 du carré-renfort 2. Chacun de ces montants 11 et 31 est muni du trou de passage 19 et 29 du demi-axe 5, dont la tête s'applique contre la face interne du montant 11 du carré-renfort 2, et dont l'embout s'applique contre la face externe de l'élément de déformation, c'est-à-dire du tirant. Le demi-axe 5 peut aussi être monté de manière que la tête s'applique contre la face externe de l'élément de déformation et dont l'embout s'applique contre la face interne du montant 11 du carré-renfort 2.

L'autre demi-axe 5 relie le montant 32 du support 1, et le montant 12 correspondant du carré-renfort 2. Chacun de ces montants 12 et 32 est muni du trou de passage 19 et 29 du demi-axe 5, dont la tête s'applique contre la face interne du montant 12 du carré-renfort 2, et dont l'embout s'applique contre la face externe du montant 32 correspondant du support 1. Le demi-axe 5 peut aussi être monté de manière que la tête s'applique contre la face externe du montant 32 correspondant du support 1, et dont l'embout s'applique contre la face interne du montant 12 du carré-renfort 2.

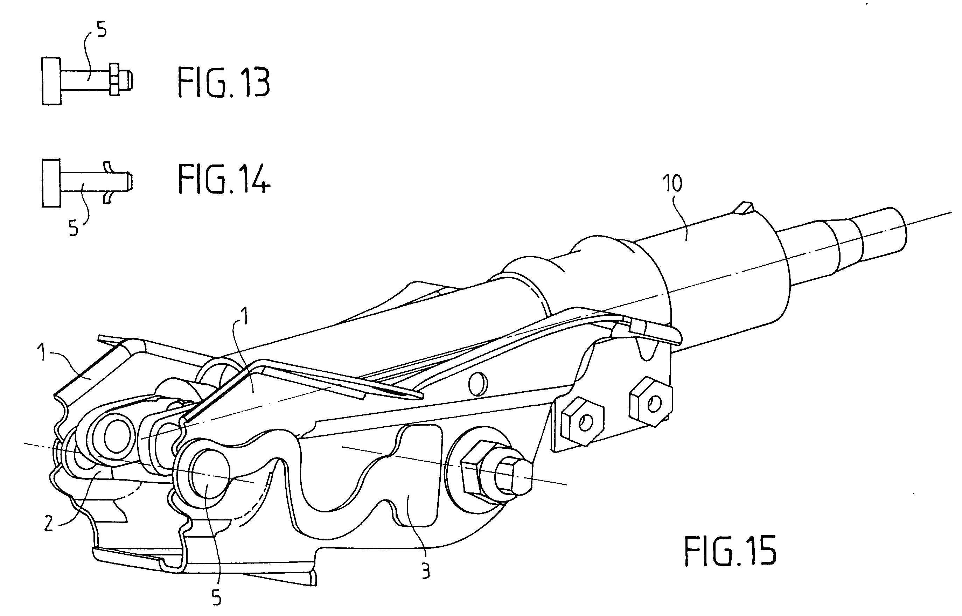

Les demi-axes 5 peuvent être dans des variantes de réalisation: des rivets, des vis, des axes avec la tête montée du côté interne ou externe du montant correspondant du support 1 ou du carré-renfort 2, ou du côté de la face externe de l'élément de déformation. Les demi-axes 5 peuvent être réalisés avec un embout constitué par une gorge munie d'un circlips ou d'un jonc d'arrêt comme cela est représenté sur la Figure 13. Les axes peuvent aussi être lisses avec un jonc auto-serrant, ce qui est le cas de la Figure 14. Dans une variante de réalisation les deux demi-axes 5 peuvent être remplacés par un axe unique.

L'élément de déformation qui est constitué par le tirant 3, est lié au support 1 dans la zone de la lumière de passage 28 du montant 31 correspondant. Ce tirant 3 est percé à l'autre extrémité pour recevoir la tige du demi-axe 5 correspondant.

Dans ce type de réalisation, chacun des montants 31 et 32 du support 1 est muni d'une échancrure 30 sur le trou de passage 29 du demi-axe 5. Cette échancrure 30 a une largeur qui est inférieure au diamètre du demi-axe 5, de manière qu'en cas de choc, chacun des demi-axes 5 liés au carré-renfort 2 puisse s'échapper du support 1, en passant à travers l'échancrure 30 correspondante, ce qui permet au demi-axe 5 du tirant 3 d'entraîner celui-ci afin d'absorber l'énergie.

Ainsi, en cas de choc, le tube-corps 10 avec son carré-renfort 2 entraîne l'élément de déformation constitué par le tirant 3 afin d'absorber l'énergie. Chacun des passages 14 du carré-renfort 2 étant muni du dégagement 15 orienté dans la direction du volant du conducteur, permet au carré-renfort 2 de se dégager du système de blocage.

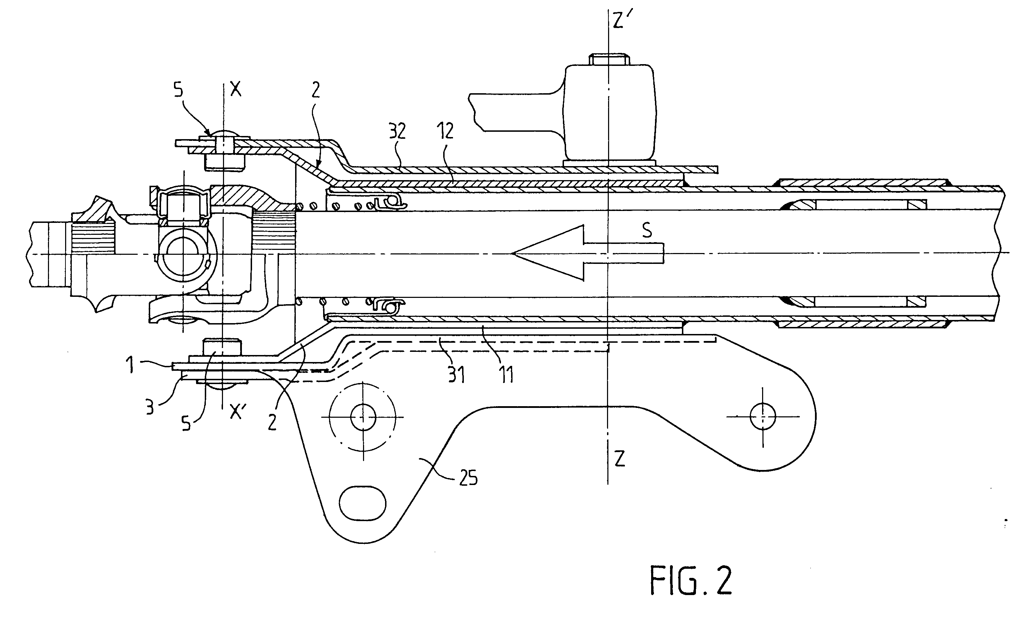

Le fonctionnement du dispositif d'absorption d'énergie se déroule comme suit. Lorsque le conducteur du véhicule heurte le volant, il exerce un effort sur le tube-corps 10 avec son carré-renfort 2 dans le sens de la flèche S comme on peut le voir sur la Figure 2. Le carré-renfort 2 est retenu sur le support 1 par les deux demi-axes 5 et par le système de blocage.

Lorsque l'effort est supérieur à:
- l'effort d'adhérence du carré-renfort 2 par rapport au support 1 au niveau du système de blocage augmenté de
- l'effort qu'il faut aux deux demi-axes 5 pour passer à travers les échancrures 30 du support 1 en les déformant,
- le carré-renfort 2 et le tube-corps 10 se mettent en mouvement par rapport au support 1.

L'échancrure 16 dans le carré-renfort 2 permet à celui-ci de s'échapper du système de blocage.

Dès que la mise en mouvement s'est produite, le carré-renfort 2 entraîne une extrémité du tirant 3 par l'intermédiaire d'un demi-axe 5, l'autre extrémité restant fixe sur le support 1. La déformation de ce tirant 3 permet d'absorber l'énergie nécessaire. Sa forme particulière du type en méandre lui permet de se déformer sur une distance qui peut être de l'ordre de 20 à 50 mm.

L'effort pour la mise en mouvement du dispositif est contrôlé par l'interférence entre le diamètre du trou de passage 29 de l'articulation aménagée sur chacun des montants 30 et 32 du support 1, avec la largeur de l'échancrure 30 qui existe au niveau de l'articulation et de l'épaisseur de ce support 1 au niveau de l'échancrure. Cet effort pour la mise en mouvement comporte l'effort dû à cette interférence augmenté de l'effort d'adhérence au niveau du système de blocage. Cet effort devient nul au bout de quelques millimètres de l'ordre de 5 à 15 mm par exemple.

L'action sur les différents paramètres simples comme l'interférence entre le diamètre du demi-axe 5 et la largeur de l'échancrure 30, ainsi que l'épaisseur et les caractéristiques de la tôle du support 1, permet d'ajuster l'effort de mise en mouvement.

La géométrie du tirant 3, c'est-à-dire la largeur des ondes, son épaisseur, le nombre d'ondes, les caractéristiques de la matière permettent de régler l'effort et la course, c'est-à-dire finalement de régler de façon précise l'énergie absorbée.

La colonne de direction selon l'invention est réalisée en intégrant l'élément de déformation dans le support 1. Dans ce cas, l'élément de liaison est constitué par le demi-axe 5 qui relie l'élément de déformation intégré aux montants 31 et 32 du support 1 et les montants 11 et 12 correspondants du carré-renfort 2. Chacun de ces montants 31, 32, 11 et 12 est muni du trou de passage 19 et 29 du demi-axe 5, dont la tête s'applique contre la face interne du montant 11, 12 du carré-renfort 2 et dont l'embout s'applique contre la face externe du montant 31, 32 correspondant du support 1.

L'élément de déformation intégré au support 1 est constitué par une zone dans chacun des montants 31, 32 disposée autour du trou de passage 29 de l'articulation du carré-renfort 2 du tube-corps 10. C'est alors la déformation du support 1 dans la zone où se situe les demi-axes 5, qui permet d'absorber l'énergie. Des aménagements particuliers de cette zone permettent de contrôler l'effort et le déplacement du carré-renfort 2 par rapport au support 1.

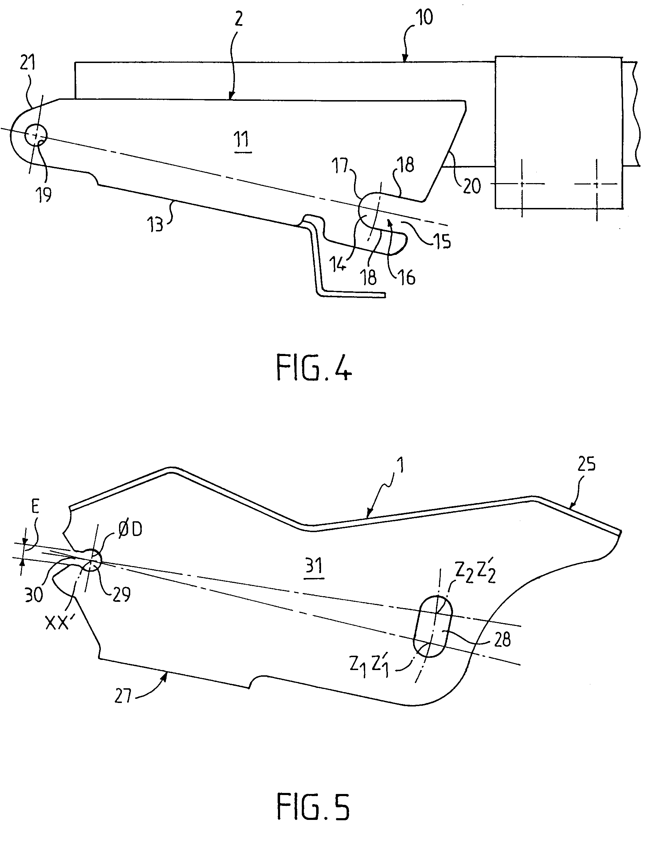

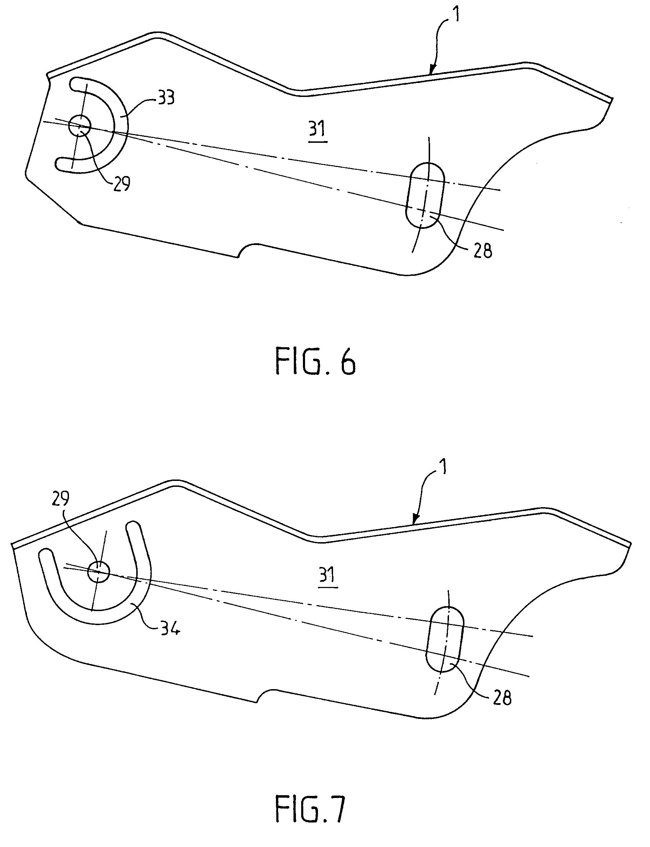

Le tube-corps représenté à la Figure 4 avec le carré-renfort 2 selon l'invention peut se monter dans les différentes variantes de réalisation du support 1 représentées sur les Figures 6 à 12.

Les Figures 6 à 12 représentent différents modes de réalisation du support 1, l'élément de déformation étant intégré à ce support dans la zone où se situent les demi-axes 5.

Dans le cas de la Figure 6, la zone de l'élément de déformation comporte une découpe 33 en forme de lunule, qui est dirigée sensiblement dans le sens de l'axe d'inclinaison, c'est-à-dire de l'axe mené à partir du trou de passage 29 de l'articulation jusqu'à la lumière de passage 28 (ou encore:axe perpendiculaire à l'axe de blocage et passant par le trou de fixation de l'un des deux montants du support et par l'axe de blocage).

Dans le cas de la Figure 7, la zone de l'élément de déformation comporte une découpe 34 en forme de U qui est dirigée de manière approximativement perpendiculaire à l'axe d'inclinaison.

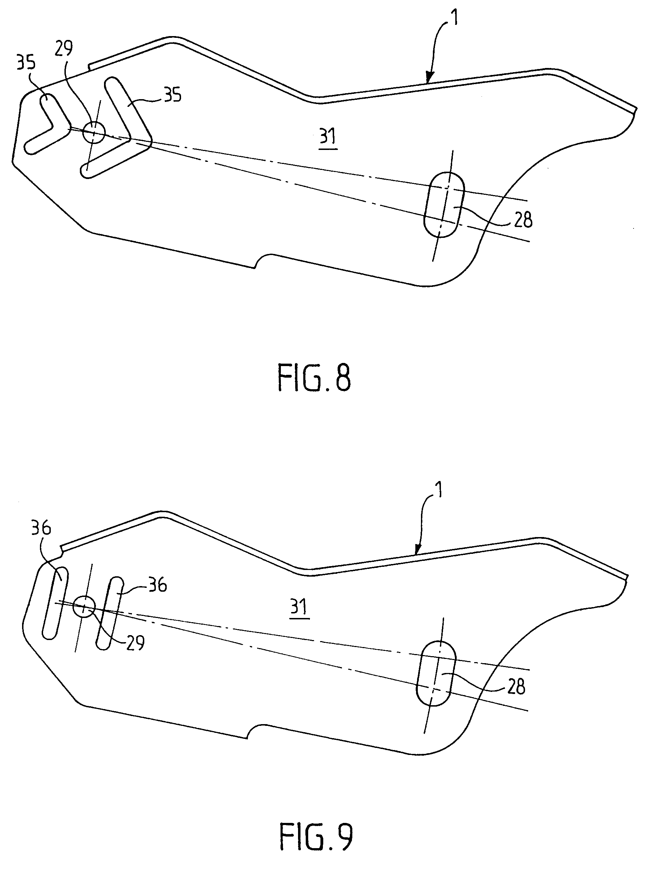

Dans le cas de la Figure 8, la zone de l'élément de déformation comporte une découpe 35 en forme de deux chevrons, qui sont disposés de part et d'autre du trou de passage 29 de l'articulation, et qui sont dirigés dans le sens de l'axe d'inclinaison.

Dans le cas de la Figure 9, la zone de l'élément de déformation comporte une découpe 36 en forme de deux lumières, qui sont disposées de part et d'autre de trous de passage 29 de l'articulation et dirigées sensiblement perpendiculairement à l'axe d'inclinaison.

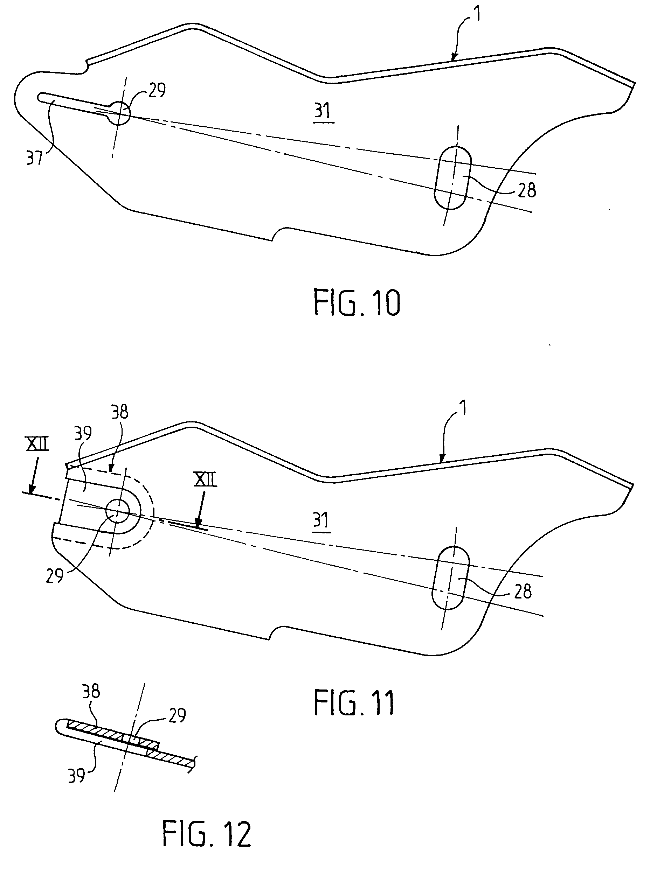

Dans le cas de la Figure 10, la zone de l'élément de déformation comporte une découpe 37 en forme d'une lumière, qui est disposée dans le sens de l'axe d'inclinaison, et qui débouche dans le trou de passage 29 de l'articulation.

Dans le cas de la Figure 11, la zone de l'élément de déformation comporte un retour du montant 31, 32 en forme de languette 38, qui comporte le trou de passage 29 de l'articulation, et qui recouvre une échancrure 39 disposée dans le sens de l'axe d'inclinaison.

Le mode de fonctionnement du dispositif d'absorption d'énergie due à un choc sur une colonne de direction de véhicule automobile, notamment réglable en inclinaison, dont l'arbre de direction est monté dans un tube-corps 10, qui est supporté et bloqué sur la carrosserie à la position voulue, comporte les phases ci-après:
- le conducteur heurte le volant et transmet l'effort au tube-corps 10 avec son carré-renfort 2,
- lorsque cet effort atteint une valeur suffisante, le carré-renfort entraîne au moins un élément de déformation afin d'absorber l'énergie, l'élément de déformation étant solidarisé avec le support 1 et relié au carré-renfort par un élément de liaison, chacun des passages aménagés dans le carré-renfort 2 pour l'axe du système de blocage du tube-corps 10 dans le support 1, étant muni d'un dégagement de façon à permettre au carré-renfort 2 de se dégager du système de blocage.

Si le véhicule est équipé d'un dispositif de sécurité gonflable, dit air-bag, le conducteur peut aussi heurter l'air-bag gonflé et transmettre l'effort au volant par l'intermédiaire de cet air-bag.

Les signes de référence insérés après les caractéristiques techniques mentionnées dans les revendications, ont pour seul but de faciliter la compréhension de ces dernières, et n'en limitent aucunement la portée.

## Revendications

1. Colonne de direction d'un véhicule automobile comportant:
- Un arbre de direction monté dans un tube-corps (10),
- un support (1) lié à la carrosserie, recevant ledit tube-corps (10),
- un système de blocage (4, 6-8) du tube-corps (10) dans le support (1), ayant un axe de blocage (4) perpendiculaire à l'axe de la colonne de direction et susceptible de libérer le tube-corps (10) en cas de choc,
- le tube-corps (10) présentant des passages (14) traversés par le système de blocage (4, 6-8),
- un élément de déformation intégré au support (1), relié au tube-corps (10) et susceptible de se déformer et d'absorber une partie au moins de l'énergie reçue par le tube-corps (10) en cas de choc,
caractérisée en ce que chacun des passages (14) du tube-corps (10) est muni d'un dégagement (15) orienté dans la direction du volant du conducteur, de façon à permettre au tube-corps (10) de se dégager du système de blocage (4, 6-8) en cas de choc.

2. Colonne de direction selon la revendication 1, caractérisée en ce que le tube-corps (10) est muni de deux montants (11, 12) latéraux, permettant le blocage du tube-corps (10) au support (1) par adhérence au moyen du système de blocage (4, 6-8), chacun desdits montants (11, 12) comportant un des passages (14) à une première extrémité (20) dudit montant (11, 12) du côté opposé au volant et le support (1) étant relié au niveau de l'élément de déformation à une seconde extrémité (21) dudit montant (11, 12) du côté du volant.

3. Colonne de direction selon l'une des revendications 1 ou 2, caractérisée en ce que le support (1) comporte deux montants (31, 32) plans et parallèles à l'axe de l'arbre de direction, chacun de ces deux montants (31, 32) comportant un trou de fixation (29) par lequel ils sont fixés au tube-corps (10) selon un axe (XX'), l'élément de déformation étant constitué par une zone desdits montants (31, 32) au voisinage des trous de fixation (29).

4. Colonne de direction selon la revendication 3, caractérisée en ce que l'élément de déformation comporte une découpe (33) en forme de lunule dirigée sensiblement dans le sens de l'axe perpendiculaire à l'axe de blocage et passant par le trou de fixation (29) de l'un des deux montants (31, 32) du support (1) et par l'axe de blocage (4).

5. Colonne de direction selon la revendication 3, caractérisée en ce que l'élément de déformation comporte une découpe (34) en forme de U dirigée approximativement perpendiculairement à l'axe perpendiculaire à l'axe de blocage et passant par le trou de fixation (29) de l'un des deux montants (31, 32) du support (1) et par l'axe de blocage (4).

6. Colonne de direction selon la revendication 3, caractérisée en ce que l'élément de déformation comporte une découpe en forme de deux chevrons (35) qui sont disposés de part et d'autre de chaque trou de fixation (29) et sont dirigés dans le sens de l'axe perpendiculaire à l'axe de blocage et passant par le trou de fixation (29) de l'un des deux montants (31, 32) du support (1) et par l'axe de blocage (4).

7. Colonne de direction selon la revendication 3, caractérisée en ce que l'élément de déformation comporte une découpe en forme de deux lumières (36) qui sont disposées de part et d'autre de chaque trou de fixation (29) sensiblement perpendiculairement à l'axe perpendiculaire à l'axe de blocage et passant par le trou de fixation (29) de l'un des deux montants (31, 32) du support (1) et par l'axe de blocage (4).

8. Colonne de direction selon la revendication 3, caractérisée en ce que l'élément de déformation comporte une découpe (37) en forme d'une lumière disposée dans le sens de l'axe perpendiculaire à l'axe de blocage et passant par le trou de fixation (29) de l'un des deux montants (31, 32) du support (1) et par l'axe de blocage (4) et débouchant dans le trou de fixation (29).

9. Colonne de direction selon la revendication 3, caractérisée en ce que l'élément de déformation comporte un retour (38) de chaque montant (31, 32) du support (1), qui comporte le trou de fixation (29) et qui recouvre une échancrure (39) disposée dans le sens de l'axe perpendiculaire à l'axe de blocage et passant par le trou de fixation (29) de l'un des deux montants (31, 32) du support (1) et par l'axe de blocage (4).

10. Colonne de direction selon l'une quelconque des revendications 1 à 9, caractérisée en ce qu'elle est articulée.

11. Colonne de direction selon l'une quelconque des revendications 3 à 9, caractérisée en ce qu'elle est articulée et que les trous de fixation (29) sont des trous d'articulation du tube-corps (10) par rapport au support (1).

12. Colonne de direction selon l'une quelconque des revendications 3 à 11, caractérisée en ce que les montants (31, 32) du support (1) sont reliés par un élément de raccordement (27).

13. Colonne de direction selon l'une quelconque des revendications 3 à 12, caractérisée en ce que chacun des deux montants (31, 32) du support (1) se prolonge à sa partie supérieure par une face d'appui (25, 26) venant s'appliquer contre la carrosserie et ayant un contour conjugué avec le contour de la partie correspondante de la carrosserie de manière à pouvoir y être fixée.

14. Colonne de direction selon la revendication 2 et l'une quelconque des revendications 3 à 13, caractérisée en ce qu'elle comporte une articulation du tube-corps (10) sur le support (1), constituée par deux demi-axes (5) montés chacun sur un des montants (11, 12) du tube-corps (10) et le montant (31, 32) correspondant du support (1).

15. Colonne de direction selon la revendication 2 et l'une quelconque des revendications 3 à 13, caractérisée en ce qu'elle comporte une articulation du tube-corps (10) sur le support (1), constituée par un axe unique monté sur les montants (11, 12, 31, 32) du tube-corps (10) et du support (1).

## Claims

1. Automobile vehicle steering column comprising :
- a steering shaft mounted in a body-tube (10),
- a support (1) connected to the vehicle body and receiving the body-tube (10),
- a system for locking (4, 6-8) the body-tube (10) in the support (1), having a locking axis (4) perpendicular to the steering column axis and liable to free the body-tube (10) in the event of an impact,
- the body-tube (10) having passages (14) traversed by the locking system (4, 6-8),
- one deformation element rigidly locked with the support (1), connected to the body-tube (10) and liable to become deformed and to absorbe at least one part of the energy received by the body-tube (10) in the event of an impact,
characterized in that each of the passages (14) in the body-tube (10) is provided with a release (15) directed in the direction of the driver steering wheel, so as to allow said body-tube (10) to free itself from the locking system (4, 6-8) in the event of an impact.

2. The steering column of claim 1, characterized in that the body-tube (10) is provided with two side vertical members (11, 12) allowing the locking of the body-tube (10) with respect to the support (1) by adherence by means of the locking system (4, 6-8), each of said vertical members (11, 12) comprising one of the passages (14) at a first end (20) of said a vertical member (11, 12) on the side which is opposed to the driver steering wheel and the support (1) being connected to a second end (21) of said vertical member (11, 12) on the driver steering wheel at the level of the deformation element.

3. The steering column according to any of claims 1 or 2, characterized in that the support (1) comprises two vertical members (31, 32) which are plane and parallel with the axis of the steering shaft, each of said vertical members (31, 32) comprising a fixing hole (29) through which said vertical members are fixed to the body-tube (10) along an axis (XX'), the deformation element being constituted by one zone of said vertical members (31, 32) in the vicinity of the fixing holes (29).

4. The steering column of claim 3, characterized in that the deformation element comprises a crescent-shaped cut-out (33) directed substantially in the direction of the axis perpendicular to the locking axis and crossing the fixing hole (29) of one of the two vertical members (31, 32) of the support (1) and the locking axis (4).

5. The steering column of claim 3, characterized in that the deformation element comprises a U-shaped cut-out (34) directed approximately perpendicular to the axis perpendicular to the locking axis and crossing the fixing hole (29) of one of the two vertical members (31, 32) of the support (1) and the locking axis (4).

6. The steering column of claim 3, characterized in that the deformation element comprises a cut-out in the form of two herring bones (35) arranged either side of the fixing hole (29) and which are directed in the direction of the axis perpendicular to the locking axis and crossing the fixing hole (29) of one of the two vertical members (31, 32) of the support (1) and the locking axis (4).

7. The steering column of claim 3, characterized in that the deformation element comprises a cut-out in the form of two elongated holes (36) arranged either side of each fixing hole (29), substantially perpendicular to the axis perpendicular to the locking axis and crossing the fixing hole (29) of one of the two vertical members (31, 32) of the support (1) and the locking axis (4).

8. The steering column of claim 3, characterized in that the deformation element comprises a cut-out (37) in the form of an elongated hole arranged in the direction of the axis perpendicular to the locking axis and crossing the fixing hole (29) of one of the two vertical members (31, 32) of the support (1) and the locking axis (4) and leading into the fixing hole (29).

9. The steering column of claim 3, characterized in that the deformation element comprises a folded-back portion (38) of each vertical member (31, 32) of the support (1) which comprises the fixing hole (29) and which covers a notch (39) arranged in the direction of the axis perpendicular to the locking axis and crossing the fixing hole (29) of one of the two vertical members (31, 32) of the support (1) and the locking axis (4).

10. Steering column according to any of claims 1 to 9, characterized in that it is articulated.

11. Steering column according to any of claims 3 to 9, characterized in that it is articulated and in that the fixing holes (29) are holes for the articulation of the body-tube (10) with respect to the support (1).

12. Steering column according to any of claims 3 to 11, characterized in that the vertical members (31, 32) of the support (1) are connected to each other by a connecting element (27).

13. Steering column according to any of claims 3 to 12, characterized in that each of the vertical members (31, 32) of the support (1) is prolonged in its upper portion by a bearing face (25, 26) which comes to bear against the vehicle body and has a contour conjugate with the contour of the corresponding part of the vehicle body so as to be able to be fixed there.

14. Steering column according to claim 2 and to any of claims 3 to 13, characterized in that it comprises an articulation of the body-tube (10) on the support (1), made up of two semi-axes (5) which are each mounted on one of the vertical members (11, 12) of the body-tube (10) and on the corresponding vertical member (31, 32) of the support (1).

15. Steering column according to claim 2 and to any of claims 3 to 13, characterized in that it comprises an articulation of the body-tube (10) on the support (1), made up of a single axis which is mounted on the vertical members (11, 12, 31, 32) of the body-tube (10) and of the support (1).

## Patentansprüche

1. Lenksäule für ein Kraftfahrzeug, mit:
- einer in einem Rohrkörper (10) angebrachten Lenkwelle,
- einer mit der Karosserie verbundenen und den Rohrkörper (10) aufnehmenden Halterung (1),
- einem System (4, 6-8) zum Verriegeln des Rohrkörpers (10) in der Halterung (1), mit einer Verriegelungsachse (4), die senkrecht zu der Achse der Lenksäule verläuft und in der Lage ist, den Rohrkörper (10) im Falle eines Stoßes freizugeben,
- wobei der Rohrkörper (10) Durchlässe (14) aufweist, durch die hindurch das Verriegelungssystem (4, 6-8) verläuft,
- einem in die Halterung (1) integrierten Verformungselement, das mit dem Rohrkörper (10) verbunden ist und in der Lage ist, sich im Falle eines Stoßes zu verformen und mindestens einen Teil der von dem Rohrkörper (10) aufgenommenen Energie zu absorbieren,
dadurch gekennzeichnet, daß jeder der Durchlässe (14) des Rohrkörpers (10) einen Auslaß (15) aufweist, der in der Richtung des Lenkrades des Fahrers derart angeordnet ist, daß der Rohrkörper (10) sich im Falle eines Stoßes von dem Verriegelungssystem (4,6-8) lösen kann.

2. Lenksäule nach Anspruch 1, dadurch gekennzeichnet, daß der Rohrkörper (10) mit zwei seitlichen Streben (11,12) versehen ist, die ein Verriegeln des Rohrkörpers (10) an der Halterung (1) durch Adhärenz mittels des Verriegelungssystems (4,6-8) ermöglichen, wobei jede der Streben (11,12) an einem dem Lenkrad gegenüberliegenden ersten Ende der Strebe (11,12) einen der Durchlässe (14) aufweist und die Halterung (1) auf der Ebene des Verformungselementes mit einem auf der Seite des Lenkrades gelegenen zweiten Ende (21) der Strebe (11,12) verbunden ist.

3. Lenksäule nach Anspruch 1 oder 2, dadurch gekennzeichnet, daß die Halterung (1) zwei Streben (31,32) aufweist, die plan ausgebildet sind und parallel zu der Lenkwelle verlaufen, wobei jede der beiden Streben (31,32) ein Befestigungsloch (29) aufweist, mit dem die Streben entlang einer Achse (XX') an dem Rohrkörper (10) befestigt sind, wobei das Verformungselement durch eine nahe den Befestigungslöchern (29) angeordnete Zone der Streben (31,32) gebildet ist.

4. Lenksäule nach Anspruch 3, dadurch gekennzeichnet, daß das Verformungselement eine sichelförmige Aussparung (33) aufweist, die sich im wesentlichen in der Richtung der Achse erstreckt, welche rechtwinklig zu der Verriegelungsachse verläuft und durch das Befestigungsloch (29) einer der beiden Streben (31,32) der Halterung (1) sowie durch die Verriegelungsachse (4) verläuft.

5. Lenksäule nach Anspruch 3, dadurch gekennzeichnet, daß das Verformungselement eine U-förmige Aussparung (34) aufweist, die sich annähernd rechtwinklig zu der Achse erstreckt, welche rechtwinklig zu der Verriegelungsachse verläuft und durch das Befestigungsloch (29) einer der beiden Streben (31,32) der Halterung (1) sowie durch die Verriegelungsachse (4) verläuft.

6. Lenksäule nach Anspruch 3, dadurch gekennzeichnet, daß das Verformungselement Aussparungen in Form zweier Winkel (35) aufweist, die auf der einen und auf der anderen Seite jedes Befestigungsloches (29) angeordnet sind und sich in der Richtung der Achse erstrecken, welche rechtwinklig zu der Verriegelungsachse verläuft und durch das Befestigungsloch (29) einer der beiden Streben (31,32) der Halterung (1) sowie durch die Verriegelungsachse (4) verläuft.

7. Lenksäule nach Anspruch 3, dadurch gekennzeichnet, daß das Verformungselement Aussparungen in Form zweier Schlitze (36) aufweist, die auf der einen und auf der anderen Seite jedes Befestigungsloches (29) angeordnet sind und sich im wesentlichen rechtwinklig zu der Achse erstrecken, welche rechtwinklig zu der Verriegelungsachse verläuft und durch das Befestigungsloch (29) einer der beiden Streben (31,32) der Halterung (1) sowie durch die Verriegelungsachse (4) verläuft.

8. Lenksäule nach Anspruch 3, dadurch gekennzeichnet, daß das Verformungselement eine Aussparung (37) in Form eines Schlitzes aufweist, der sich in der Richtung der Achse erstreckt, welche rechtwinklig zu der Verriegelungsachse verläuft und durch das Befestigungsloch (29) einer der beiden Streben (31,32) der Halterung (1) sowie durch die Verriegelungsachse (4) verläuft und die in das Befestigungsloch (29) mündet.

9. Lenksäule nach Anspruch 3, dadurch gekennzeichnet, daß das Verformungselement einen in jeder Strebe (31,32) der Halterung (1) angeordneten Umschlag (38) aufweist, in dem das Befestigungsloch (29) enthalten ist und der eine bogenförmige Aussparung (39) abdeckt, die sich in der Richtung der Achse erstreckt, welche rechtwinklig zu der Verriegelungsachse verläuft und durch das Befestigungsloch (29) einer der beiden Streben (31,32) der Halterung (1) sowie durch die Verriegelungsachse (4) verläuft.

10. Lenksäule nach einem der Ansprüche 1 bis 9, dadurch gekennzeichnet, daß sie gelenkig angeordnet ist.

11. Lenksäule nach einem der Ansprüche 3 bis 9, dadurch gekennzeichnet, daß sie gelenkig angeordnet ist und daß die Befestigungslöcher (29) Löcher zum Anlenken des Rohrkörpers (10) an der Halterung (1) sind.

12. Lenksäule nach einem der Ansprüche 3 bis 11, dadurch gekennzeichnet, daß die Streben (31,32) der Halterung (1) durch ein Verbindungselement (27) verbunden sind.

13. Lenksäule nach einem der Ansprüche 3 bis 12, dadurch gekennzeichnet, daß jede der beiden Streben (31,32) der Halterung (1) an ihrem oberen Bereich durch eine Anlagefläche (25,26) verlängert ist, die gegen die Karosserie anliegt und eine Kontur aufweist, die der Kontur des entsprechenden Bereiches der Karosserie derart angepaßt ist, daß sie an dieser befestigt werden kann.

14. Lenksäule nach Anspruch 2 und einem der Ansprüche 3 bis 13, dadurch gekennzeichnet, daß sie eine zum Anlenken des Rohrkörpers (10) an der Halterung (1) vorgesehene Anlenkvorrichtung aufweist, die aus zwei Halbachsen (5) besteht, welche jeweils an einer der Streben (11,12) des Rohrkörpers (10) und der entsprechenden Strebe (31,32) der Halterung (1) befestigt sind.

15. Lenksäule nach Anspruch 2 und einem der Ansprüche 3 bis 13, dadurch gekennzeichnet, daß sie eine zum Anlenken des Rohrkörpers (10) an der Halterung (1) vorgesehene Anlenkvorrichtung aufweist, die aus einer einzigen Achse besteht, die an den Streben (11,12,31,32) des Rohrkörpers (10) und der Halterung (1) befestigt ist.
